# EUROPEAN PATENT SPECIFICATION

(11) **EP 4 326 107 B1**
(45) Date of publication and mention of the grant of the patent: **18.03.2026**
(21) Application number: 23743490.7
(22) Date of filing: 19.01.2023
(51) Int. Cl.: A24F 40/50, A24F 40/46, H02M 1/00, A24F 40/57, H02J 7/00

(54) **AEROSOL GENERATING DEVICE FOR PREHEATING AEROSOL-GENERATING ARTICLE AND OPERATING METHOD THEREOF**
AEROSOLERZEUGUNGSVORRICHTUNG ZUM VORWÄRMEN EINES AEROSOLERZEUGUNGSARTIKELS UND BETRIEBSVERFAHREN DAFÜR
DISPOSITIF DE GÉNÉRATION D'AÉROSOL POUR PRÉCHAUFFER UN ARTICLE DE GÉNÉRATION D'AÉROSOL ET SON PROCÉDÉ DE FONCTIONNEMENT

(30) Priority: 19.01.2022 KR 20220007977
(43) Date of publication of application: 28.02.2024
(73) Proprietor: KT & G Corporation, Daejeon 34337 (KR)
(72) Inventor: KIM, Yong Hwan, Anyang-si, Gyeonggi-do 13970 (KR); JANG, Seok Su, Daejeon 34337 (KR); KIM, Dong Sung, Seoul 06310 (KR); LIM, Hun Il, Seoul 05555 (KR)
(74) Representative: Ter Meer Steinmeister & Partner
(86) International application number: PCT/KR2023/000943
(87) International publication number: WO 2023/140646

(56) References cited:
- WO-A1-2018/019786
- WO-A1-2018/202403
- US-A1- 2020 367 569
- US-A1- 2021 204 611
- US-A1- 2021 298 364

## Description

### Technical Field

One or more embodiments relate to an aerosol-generating device capable of preheating an aerosol-generating article according to a preheating profile and an operating method of the aerosol-generating device.

### Background Art

Recently, the demand for alternative methods to overcome the shortcomings of general cigarettes has increased. For example, there is an increasing demand for a system of generating aerosols by heating cigarettes or an aerosol-generating material by using an aerosol-generating device, rather than by burning cigarettes.

When an aerosol-generating article is inserted into an aerosol-generating device, the aerosol-generating device may preheat a heater based on a preheating profile preset for the inserted aerosol-generating article. The preheating of the heater may be an operation of heating a heater to a certain temperature before a user starts smoking to enable a sufficient amount of aerosol to be generated from the aerosol-generating article when the user uses the aerosol-generating article.

US 2021/204611 discloses an aerosol generating apparatus comprising a heater and a controller configured to monitor and control power supplied to the heater such that the heater generates the aerosol at a second target temperature lower than a first target temperature upon receiving an input of reactivating the heater within a preset time after the heater generates the aerosol at the first target temperature.

### Disclosure of Invention

### Technical Problem

In a process of manufacturing aerosol-generating articles, an aerosol-generating article with defects and errors may be manufactured. Also, an aerosol-generating article may be stored in an over-wet state, not in a favorable storage environment. When such a defective aerosol-generating article is used for smoking, the amount of smoke may be insufficient and the taste of tobacco may be spoiled. Accordingly, the smoking may not be satisfactory to users.

The technical problems of the disclosure are not limited to the aforementioned description and technical problems that are not stated may be clearly understood by one of ordinary skill in the art from the embodiments described hereinafter and the attached drawings.

### Solution to Problem

According to one or more embodiments, a state of an aerosol-generating article is determined based on a heating rate of a heater, and the aerosol-generating article is preheated according to a changed preheating profile.

According to one or more embodiments, an aerosol-generating device includes a heater configured to heat at least a portion of an aerosol-generating article and a processor configured to control supply of power to the heater according to a preheating profile including a first section and a second section, wherein the processor is further configured to, when a time taken for the heater to reach a target temperature in the first section is less than or greater than a preset range, obtain a changed preheating profile in which a time corresponding to the second section is changed, and supply power to the heater according to a changed preheating profile.

According to one or more embodiments, an operating method of an aerosol-generating device includes, when a time taken to reach a target temperature in a first section of a preheating profile including the first section and a second section is less than or greater than a preset range, obtaining a changed preheating profile in which a time corresponding to the second section is changed, and supplying power to a heater according to the changed preheating profile.

### Advantageous Effects of Invention

According to one or more embodiments, although a thin aerosol-generating article is inserted into an aerosol-generating device because of a thickness error, the aerosol-generating article may be sufficiently heated as an additional compensation heating time is added.

According to one or more embodiments, although an aerosol-generating article containing a great amount of moisture is inserted into an aerosol-generating device, the aerosol-generating article may be properly heated by reducing heat therein.

Effects of the embodiments are not limited to those stated above, and effects that are not described herein may be clearly understood by one of ordinary skill in the art from the present specification and the attached drawings.

### Brief Description of Drawings

FIG. 1 is a block diagram of an aerosol-generating device according to an embodiment.
FIG. 2 is a flowchart showing change of a preheating profile in an aerosol-generating device, according to an embodiment.
FIG. 3 is a detailed flowchart showing change of a preheating profile according to a time taken by a temperature of a heater to reach a target temperature, according to an embodiment.
FIG. 4 illustrates an example of a preheating profile.
FIG. 5 illustrates an example of a preheating profile in a normal state, a first abnormal state, and a second abnormal state.
FIG. 6 illustrates another example of a preheating profile in a first abnormal state and a second abnormal state.
FIG. 7 illustrates an example of a preheating profile when an abnormal operation of a heater is detected.
FIG. 8 is a block diagram of an aerosol-generating device according to another embodiment.

### Best Mode for Carrying out the Invention

Regarding the terms in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, terms which can be arbitrarily selected by the applicant in particular cases. In such a case, the meaning of the terms will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

As used herein, hen an expression such as "at least any one" precedes arranged elements, it modifies all elements rather than each arranged element. For example, the expression "at least any one of a, b, and c" should be construed to include a, b, c, or a and b, a and c, b and c, or a, b, and c.

In an embodiment, an aerosol generating device may be a device that generates aerosols by electrically heating a cigarette accommodated in an interior space thereof.

The aerosol generating device may include a heater. In an embodiment, the heater may be an electro-resistive heater. For example, the heater may include an electrically conductive track, and the heater may be heated when currents flow through the electrically conductive track.

The heater may include a tube-shaped heating element, a plate-shaped heating element, a needle-shaped heating element, or a rod-shaped heating element, and may heat the inside or outside of a cigarette according to the shape of a heating element.

A cigarette may include a tobacco rod and a filter rod. The tobacco rod may be formed of sheets, strands, and tiny bits cut from a tobacco sheet. Also, the tobacco rod may be surrounded by a heat conductive material. For example, the heat conductive material may be, but is not limited to, a metal foil such as aluminum foil.

The filter rod may include a cellulose acetate filter. The filter rod may include at least one segment. For example, the filter rod may include a first segment configured to cool aerosols, and a second segment configured to filter a certain component in aerosols.

In another embodiment, the aerosol generating device may be a device that generates aerosols by using a cartridge containing an aerosol generating material.

The aerosol generating device may include a cartridge that contains an aerosol generating material, and a main body that supports the cartridge. The cartridge may be detachably coupled to the main body, but is not limited thereto. The cartridge may be integrally formed or assembled with the main body, and may also be fixed to the main body so as not to be detached from the main body by a user. The cartridge may be mounted on the main body while accommodating an aerosol generating material therein. However, the present disclosure is not limited thereto. An aerosol generating material may also be injected into the cartridge while the cartridge is coupled to the main body.

The cartridge may contain an aerosol generating material in any one of various states, such as a liquid state, a solid state, a gaseous state, a gel state, or the like. The aerosol generating material may include a liquid composition. For example, the liquid composition may be a liquid including a tobacco-containing material having a volatile tobacco flavor component, or a liquid including a non-tobacco material.

The cartridge may be operated by an electrical signal or a wireless signal transmitted from the main body to perform a function of generating aerosols by converting the phase of an aerosol generating material inside the cartridge into a gaseous phase. The aerosols may refer to a gas in which vaporized particles generated from an aerosol generating material are mixed with air.

In another embodiment, the aerosol generating device may generate aerosols by heating a liquid composition, and generated aerosols may be delivered to a user through a cigarette. That is, the aerosols generated from the liquid composition may move along an airflow passage of the aerosol generating device, and the airflow passage may be configured to allow aerosols to be delivered to a user by passing through a cigarette.

In another embodiment, the aerosol generating device may be a device that generates aerosols from an aerosol generating material by using an ultrasonic vibration method. At this time, the ultrasonic vibration method may mean a method of generating aerosols by converting an aerosol generating material into aerosols with ultrasonic vibration generated by a vibrator.

The aerosol generating device may include a vibrator, and generate a short-period vibration through the vibrator to convert an aerosol generating material into aerosols. The vibration generated by the vibrator may be ultrasonic vibration, and the frequency band of the ultrasonic vibration may be in a frequency band of about 100 kHz to about 3.5 MHz, but is not limited thereto.

The aerosol generating device may further include a wick that absorbs an aerosol generating material. For example, the wick may be arranged to surround at least one area of the vibrator, or may be arranged to contact at least one area of the vibrator.

As a voltage (for example, an alternating voltage) is applied to the vibrator, heat and/ or ultrasonic vibrations may be generated from the vibrator, and the heat and/or ultrasonic vibrations generated from the vibrator may be transmitted to the aerosol generating material absorbed in the wick. The aerosol generating material absorbed in the wick may be converted into a gaseous phase by heat and/or ultrasonic vibrations transmitted from the vibrator, and as a result, aerosols may be generated.

For example, the viscosity of the aerosol generating material absorbed in the wick may be lowered by the heat generated by the vibrator, and as the aerosol generating material having a lowered viscosity is granulated by the ultrasonic vibrations generated from the vibrator, aerosols may be generated, but is not limited thereto.

In another embodiment, the aerosol generating device is a device that generates aerosols by heating an aerosol generating article accommodated in the aerosol generating device in an induction heating method.

The aerosol generating device may include a susceptor and a coil. In an embodiment, the coil may apply a magnetic field to the susceptor. As power is supplied to the coil from the aerosol generating device, a magnetic field may be formed inside the coil. In an embodiment, the suspector may be a magnetic body that generates heat by an external magnetic field. As the suspector is positioned inside the coil and a magnetic field is applied to the suspector, the suspector generates heat to heat an aerosol generating article. In addition, optionally, the suspector may be positioned within the aerosol generating article.

In another embodiment, the aerosol generating device may further include a cradle.

The aerosol generating device may configure a system together with a separate cradle. For example, the cradle may charge a battery of the aerosol generating device. Alternatively, the heater may be heated when the cradle and the aerosol generating device are coupled to each other.

Hereinafter, the present disclosure will now be described more fully with reference to the accompanying drawings, in which exemplary embodiments of the present disclosure are shown such that one of ordinary skill in the art may easily work the present disclosure. The present disclosure may be implemented in a form that can be implemented in the aerosol generating devices of the various embodiments described above or may be implemented in various different forms, and is not limited to the embodiments described herein.

Hereinafter, embodiments of the present disclosure will be described in detail with reference to the drawings.

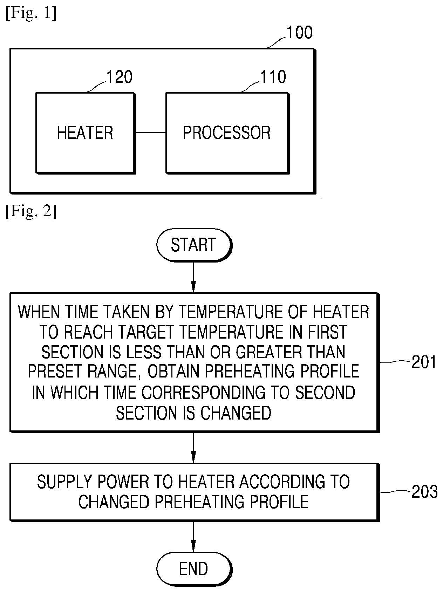

FIG. 1 is a block diagram of an aerosol-generating device according to an embodiment.

Referring to FIG. 1, an aerosol-generating device 100 may include a processor 110 and a heater 120. However, hardware components in the aerosol-generating device 100 are not limited to those shown in FIG. 1. According to the design of the aerosol-generating device 100, it will be understood by one of ordinary skill in the art that some of the hardware components shown in FIG. 1 may be omitted or new components may be added.

Hereinafter, an operation of each of the components will be described without being limited to a location in a particular space in which the aerosol-generating device 100 is located.

In an embodiment, the heater 120 may heat at least a portion of an aerosol-generating article inserted into the aerosol-generating device 100. For example, the heater 120 may receive power from a battery (not shown) according to the control of the processor 110 and heat at least a portion of the aerosol-generating article with the received power, thereby generating aerosol.

In an embodiment, the processor 110 may preheat the aerosol-generating article according to a preheating profile.

In the present specification, the term "preheating profile" may indicate a temperature profile of the heater 120. In more detail, the "preheating profile" may be a temperature profile for controlling the heater 120 during the entire preheating time. The total preheating time (e.g., 40 seconds) may start when the aerosol-generating article is inserted or when power starts to be supplied to the heater 120.

In the present specification, the "preheating profile" may be a temperature increase section, a temperature maintaining section, and a temperature decrease section. In this case, the temperature increase section, the temperature maintaining section, and the temperature decrease section may be sequentially included, but one or more embodiments are not limited thereto. Also, the "preheating profile" may include a "first section" including the temperature increase section and the temperature maintaining section, and a "second section" including the temperature decrease section, but one or more embodiments are not limited thereto.

In an embodiment, the processor 110 may change the preheating profile based on a time taken for the heater 120 to reach a target temperature in the first section of the preheating profile.

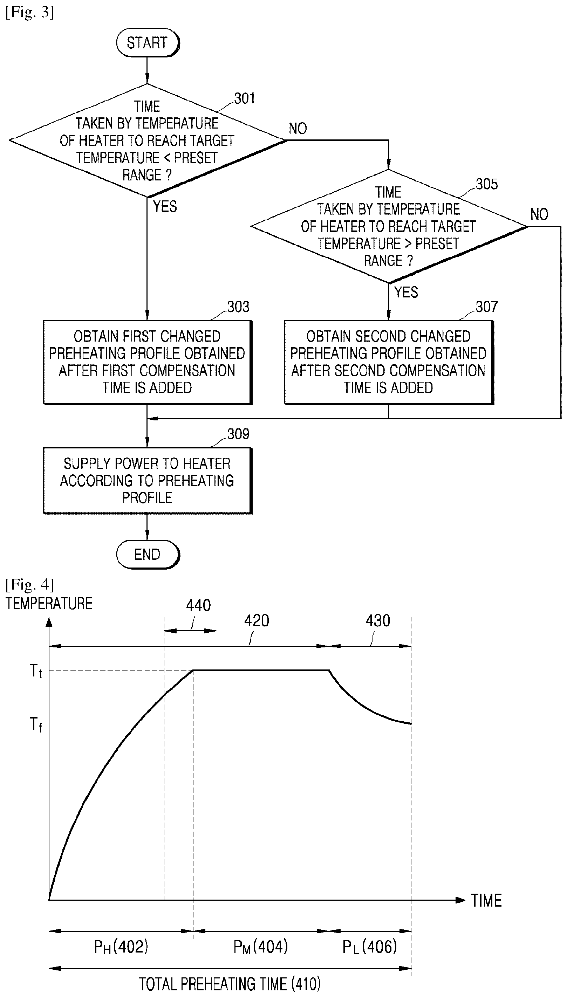

For example, when the time taken for the heater 120 to reach the target temperature in the first section is out of a preset range, the processor 110 may change the preheating profile. In this case, the term "preset range" may indicate a range of time taken for the heater 120 to reach the target temperature when an aerosol-generating article inserted into a device is in a normal state (e.g., when a dedicated cigarette is used and/or a cigarette contains an appropriate amount of moisture). Also, the changed preheating profile may be a preheating profile in which the time corresponding to a second section of an existing preheating profile that includes a temperature decrease section is changed. The changed preheating profile is described in detail with reference to FIG. 3.

In an embodiment, the processor 110 may determine the state of the aerosol-generating article according to the time taken by the temperature of the heater 120 to reach the target temperature.

For example, when the time taken by the temperature of the heater 120 to reach the target temperature is within a preset range (e.g., about 25 seconds to about 27 seconds), the processor 110 may determine that the aerosol-generating article inserted into the device is in a normal state.

As another example, when the time taken for the heater 120 to reach the target temperature is less than the preset range (e.g., about 23 seconds), the processor 110 may determine that the aerosol-generating article inserted into the device is in an abnormal state (e.g., non-dedicated or incompatible cigarette).

As another example, when the time taken for the heater 120 to reach the target temperature is greater than the preset range (e.g., about 29 seconds), the processor 110 may determine that the aerosol-generating article inserted into the device is in an abnormal state (e.g., an over-wet cigarette).

In an embodiment, the processor 110 may obtain a preheating profile changed according to the time taken for the heater 120 to reach the target temperature, and may supply power to the heater 120 according to the changed preheating profile. For example, the processor 110 may supply power to the heater 120 according to the changed preheating profile under the Pulse Width Modulation (PWM) control, the Proportional Integral Differential (PID) control, or the like.

FIG. 2 is a flowchart showing change of a preheating profile in an aerosol-generating device, according to an embodiment.

Referring to FIG. 2, in operation 201, when a time taken for a heater (e.g., the heater 120 of FIG. 1) to reach a target temperature is less than or greater than a preset range, a processor (e.g., the processor 110 of FIG. 1) may obtain a changed preheating profile.

In an embodiment, the processor 110 may measure the temperature of the heater 120 by using a temperature sensor. For example, an aerosol-generating device (e.g., the aerosol-generating device 100 of FIG. 1) may include a separate temperature sensor arranged between the heater 120 and the processor 110. As another example, the heater 120 may function as a temperature sensor and thus directly transmit data regarding the temperature of the heater 120 to the processor 110.

In an embodiment, the processor 110 may measure a time corresponding to the temperature increase section in a first section of the preheating profile. That is, the processor 110 may measure the time taken for the heater 120 to reach the target temperature. For example, the processor 110 may measure the time taken for the heater 120 to reach the target temperature, based on the data regarding the temperature of the heater 120, which is obtained using the temperature sensor, and time data obtained using a separate Real Time Clock (RTC) module.

In an embodiment, the processor 110 may determine whether the time taken for the heater 120 to reach the target temperature is within a preset range. In this case, the term "preset range" may indicate a range of time for the heater 120 to reach the target temperature when the aerosol-generating article inserted into the device is in a normal state. For example, it may be predetermined that the temperature of the heater 120 reaches a target temperature (e.g., about 270°C) within about 25 seconds to about 27 seconds when an aerosol-generating article in the normal state is inserted into the aerosol-generating device 100. In this case, the preset range may be from about 25 seconds to about 27 seconds.

In an embodiment, the processor 110 may change the preheating profile when the temperature of the heater 120 does not reach the target temperature within the preset range. For example, the changed preheating profile may be a preheating profile in which a time, which corresponds to a second section of an existing preheating profile that includes a temperature decrease section, is changed.

That is, when the temperature of the heater 120 reaches the target temperature within only about 24 seconds, which is less than the preset range (e.g., about 25 seconds to about 27 seconds), the processor 110 may add a first compensation time to a time preset for the second section and thus obtain the changed preheating profile. Also, when the temperature of the heater 120 reaches the target temperature within only about 35 seconds, which is greater than the preset range, the processor 110 may add a second compensation time to a time preset for the second section and thus obtain the changed preheating profile. In this case, the first compensation time may be different from the second compensation time, which is described below in detail with reference to FIG. 3.

According to an embodiment, in operation 203, the processor 110 may supply power to the heater 120 based on the changed preheating profile.

In an embodiment, the existing preheating profile may include a temperature increase section P_{H} in which the temperature of the heater 120 increases to the target temperature, the temperature maintaining section P_{M} in which the temperature of the heater 120 is maintained at the target temperature, and a temperature decrease section P_{L} in which the temperature of the heater 120 decreases to a preheating termination temperature. Also, the first section may correspond to the temperature increase section and the temperature maintaining section, and the second section may correspond to the temperature decrease section.

In an embodiment, the changed preheating profile may indicate a preheating profile in which a time corresponding to the first section is maintained and a time corresponding to the second section is only changed.

For example, a time corresponding to a first section P_{H} + P_{M} of the existing preheating profile, which is the combined time of the temperature increase section P_{H} and the temperature maintaining section P_{M}, may be the same as a time corresponding to a first section P'_{H} + P'_{M} of the changed preheating profile. Instead, when the temperature of the heater 120 reaches the target temperature substantially fast, a time corresponding to the temperature increase section P_{H} may decrease, and accordingly, a time corresponding to the temperature maintaining section P_{M} may relatively increase. Also, when the temperature of the heater 120 reaches the target temperature relatively slowly, the time corresponding to the temperature increase section P_{H} may increase, and accordingly, the time corresponding to the temperature maintaining section P_{M} may relatively decrease.

For example, a time corresponding to the second section of the changed preheating profile that is a temperature decrease section P'_{L} may be different from the time corresponding to the second section of the existing preheating profile that is the temperature decrease section P_{L}. That is, compared to the existing preheating profile, the processor 110 may add a compensation time to the time corresponding to the second section and supply power to the heater 120 during the temperature decrease section. Detailed description regarding the added compensation time is provided with reference to FIG. 3.

FIG. 3 is a detailed flowchart showing change of a preheating profile according to a time taken by a temperature of a heater to reach a target temperature, according to an embodiment. The description already provided or similar or corresponding to that of FIG. 3 may be omitted.

Referring to FIG. 3, in operation 301, a processor (e.g., the processor 110 of FIG. 1) may determine whether a time taken for a heater (e.g., the heater 120 of FIG. 1) to reach a target temperature is less than a preset range. In this case, the term "preset range" may indicate a range of time taken for the heater 120 to reach the target temperature when an aerosol-generating article inserted into a device is in a normal state. For example, the processor 110 may preset that the temperature of the heater 120 reaches a target temperature (e.g., about 270°C) within about 25 seconds to about 27 seconds if an aerosol-generating article in a normal state is inserted into the aerosol-generating device 100. In this case, the preset range may be from about 25 seconds to about 27 seconds.

In an embodiment, the processor 110 may obtain the time taken for the heater 120 to reach the target temperature from a point in time when the aerosol-generating article is inserted into the aerosol-generating device (e.g., the aerosol-generating device 100 of FIG. 1). For example, the processor 110 may detect that the aerosol-generating article is inserted into the aerosol-generating device (e.g., the aerosol-generating device 100 of FIG. 1) through a separate insertion detection sensor (e.g., a capacitive sensor, an optical sensor, etc.).

In another embodiment, the processor 110 may obtain the time taken for the heater 120 to reach the target temperature from a point in time when the power starts to be supplied to the heater 120. For example, the processor 110 may start supplying the power to the heater 120 under certain conditions (e.g., whether a user input is received, whether an aerosol-generating article is inserted, etc.) and may control the supply of the power to the heater 120 through a battery (not shown).

In an embodiment, when the time taken for the heater 120 to reach the target temperature is less than the preset range, the processor 110 may obtain, in operation 303, a first changed preheating profile generated after the first compensation time is added. That is, the processor 110 may obtain the first changed preheating profile where the first compensation time is added to a time preset for the second section of the preheating profile.

The existing preheating profile may include a time preset for the first section including the temperature increase section P_{H} and the temperature maintaining section P_{M}, and the second section including the temperature decrease section P_{L}. For example, the existing preheating profile may include a certain time (e.g., 37 seconds) which is preset for total preheating time. The total preheating time may include the time (e.g., 30 seconds) which is preset for the first section P_{H} + P_{M}, and the time (e.g., 7 seconds) which is preset for the second section P_{L}. In this example, the 30 seconds, which is the time preset for the first section, may include 26 seconds set for the temperature increase section P_{H} and 4 seconds set for the temperature maintaining section P_{M}.

In an embodiment, when the time taken by the temperature of the heater 120 to reach the target temperature is less than the preset range, the processor 110 may change the time corresponding to the second section of the existing preheating profile. For example, when the preset range of the time taken for the heater 120 to reach the target temperature is from about 25 seconds to about 27 seconds, if the temperature of the heater 120 reaches the target temperature within only about 23 seconds, the processor 110 may change the time corresponding to the second section of the existing preheating profile. That is, the processor 110 may obtain the first changed preheating profile by adding the first compensation time (e.g., 5 seconds) to 7 seconds which is the time preset for the second section of the existing preheating profile.

According to an embodiment, when the time taken for the heater 120 to reach the target temperature is not less than the preset range, the processor 110 may determine, in operation 305, whether the time taken by the temperature of the heater 120 to reach the target temperature is greater than the preset range.

In an embodiment, when the time taken for the heater 120 to reach the target temperature is greater than the preset range, the processor 110 may obtain, in operation 307, a second changed preheating profile where the second compensation time is added. That is, the processor 110 may obtain the second changed preheating profile by adding the second compensation time to the time preset for the second section of the preheating profile.

In an embodiment, when the time taken for the heater 120 to reach the target temperature is greater than the preset range, the processor 110 may change the time corresponding to the second section of the existing preheating profile. For example, when the preset range of the time taken for the heater 120 to reach the target temperature is from about 25 seconds to about 27 seconds, if the temperature of the heater 120 reaches the target temperature after about 29 seconds, the processor 110 may change the time corresponding to the second section of the existing preheating profile. That is, the processor 110 may obtain the second changed preheating profile by adding the second compensation time (e.g., 10 seconds) to 7 seconds which is preset for the second section of the existing preheating profile.

In an embodiment, the second compensation time included in the second changed preheating profile may be longer than the first compensation time included in the first changed preheating profile. In this case, when the time taken for the heater 120 to reach the target temperature is less than the preset range, the first compensation time may serve to compensate for the lack of heat transmitted to an aerosol-generating article such that the aerosol-generating article may be additionally heated. Also, when the time taken for the heater 120 to reach the target temperature is greater than the preset range, the second compensation time may serve to alleviate the heat in the aerosol-generating article.

According to an embodiment, in operation 309, the processor 110 may supply power to the heater 120 based on the preheating profile. In this case, the preheating profile may be a changed preheating profile or an existing preheating profile.

In an embodiment, when the time taken for the heater 120 to reach the target temperature is less than the preset range, the processor 110 may supply power to the heater 120 according to a first preheating profile. For example, when the time taken for the heater 120 to reach the target temperature is less than the preset range, the processor 110 may supply power to the heater 120 such that the temperature decrease section corresponds to a time (e.g., 12 seconds) that is obtained by adding the first compensation time (e.g., 5 seconds) to the time (e.g., 7 seconds) preset for the second section of the existing preheating profile.

In another embodiment, when the time taken for the heater 120 to reach the target temperature is greater than the preset range, the processor 110 may supply power to the heater 120 according to a second preheating profile. For example, when the time taken for the heater 120 to reach the target temperature is greater than the preset range, the processor 110 may supply power to the heater 120 such that the temperature decrease section corresponds to a time (e.g., 17 seconds) that is obtained by adding the second compensation time (e.g., 10 seconds) to the time (e.g., 7 seconds) preset for the second section of the existing preheating profile.

In another embodiment, when the time taken by the temperature of the heater 120 to reach the target temperature is within the preset range, the processor 110 may supply power to the heater 120 according to the existing preheating profile. For example, when the time taken for the heater 120 to reach the target temperature is within the preset range, the processor 110 may supply power to the heater 120 such that the temperature decrease section corresponds to the time (e.g., 7 seconds) preset for the second section of the existing preheating profile.

In an embodiment, the aerosol-generating device 100 may further include a memory. In this case, the memory may store therein compensation time data corresponding to the time taken for the heater 120 to reach the target temperature. For example, when the time taken for the heater 120 to reach the target temperature is a first time (e.g., 23 seconds), the processor 110 may obtain, from the memory, the first compensation time (e.g., 5 seconds) that is compensation time data corresponding to the first time. As another example, when the time taken for the heater 120 to reach the target temperature is a second time (e.g., 29 seconds), the processor 110 may obtain, from the memory, the second compensation time (e.g., 10 seconds) that is compensation time data corresponding to the second time. As another example, when the time taken for the heater 120 to reach the target temperature is a third time (e.g., 26 seconds), the processor 110 may fail to obtain, from the memory, compensation time data corresponding to the third time. That is, the memory may only store therein compensation time data regarding a case where the time taken for the heater 120 to reach the target temperature is less than or greater than the preset range. However, embodiments regarding the compensation time data is not limited thereto.

FIG. 4 illustrates an example of a preheating profile.

Referring to FIG. 4, the existing preheating profile may include a first section 420 including a temperature increase section P_{H} (402) and a temperature maintaining section P_{M} (404), and a second section 430 including a temperature decrease section P_{L} (406). Also, the existing preheating profile may include total preheating time 410. The periods of time may be respectively preset for a plurality of temperature sections. For example, the total preheating time 410 of the existing preheating profile may be set to be 37 seconds, a time corresponding to the temperature increase section P_{H} (402) may be set to be 26 seconds, a time corresponding to the temperature maintaining section P _{M} (404) may be set to be 4 seconds, and time corresponding to the temperature decrease section P_{L} (406) may be set to be 7 seconds.

In an embodiment, the processor (e.g., the processor 110 of FIG. 1) may determine whether a time taken for the heater 120 to reach a target temperature Tt is within a preset range 440. For example, the preset range of the time taken for the heater 120 to reach the target temperature is from about 25 seconds to about 27 seconds, and when the temperature of the heater 120 reaches the target temperature within about 26 seconds, the processor 110 may supply power to the heater 120 according to the existing preheating profile. As another example, when the temperature of the heater 120 does not reach the target temperature in the preset range of about 25 seconds to about 27 seconds, the processor 110 may supply power to the heater 120 according to a changed preheating profile in which the time corresponding to the second section 430 of the existing preheating profile is changed.

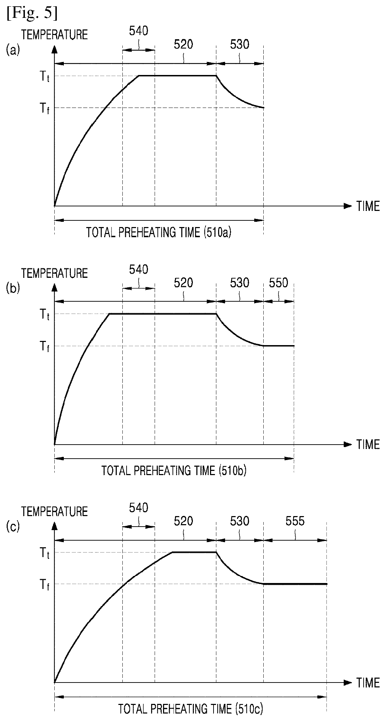

FIG. 5 illustrates an example of a preheating profile in a normal state, a first abnormal state, and a second abnormal state.

Referring to the graph (a) of FIG. 5, the existing preheating profile may include a first section 520 and a second section 530. In this case, the existing preheating profile may be a preheating profile applied to the heater (e.g., the heater 120 of FIG. 1) when an aerosol-generating article inserted into an aerosol-generating device (e.g., the aerosol-generating device 100 of FIG. 1) is in a normal state. The graph (a) showing the existing preheating profile may include total preheating time 510a that is preset.

In an embodiment, a processor (e.g., the processor 110 of FIG. 1) may determine whether a time taken for the heater 120 to reach a target temperature Tₜ is within a preset range 540. For example, when the preset range 540 is from about 25 seconds to about 27 seconds, the processor 110 may determine whether the time taken for the heater 120 to reach the target temperature Tₜ, about 270°C, is in the range from about 25 seconds to about 27 seconds. When the time taken for the heater 120 to reach the target temperature Tₜ is in the preset range, the processor 110 may supply power to the heater 120 according to an existing preheating profile including the total preheating time 510a. Accordingly, as the second section 530 ends, the temperature of the heater 120 may reach a preheating termination temperature T_{f}.

Referring to the graph (b) of FIG. 5, a first changed preheating profile may include a first section 520, a second section 530, and a first compensation time 550. In this case, the first changed preheating profile may be a preheating profile applied to the heater 120 when an aerosol-generating article inserted into the aerosol-generating device 100 is in a first abnormal state. The first abnormal state may be a state in which heat generated from the heater 120 (e.g., an external heater) is not sufficiently transmitted to the aerosol-generating article because a thickness of the aerosol-generating article is too small. In this case, the graph (b) showing the first changed preheating profile may include total preheating time 510b in which the first compensation time 550 is added to the total preheating time 510a.

In an embodiment, the processor 110 may determine whether the time taken for the heater 120 to reach the target temperature Tₜ is within the preset range 540. For example, when the preset range 540 is from about 25 seconds to about 27 seconds, the processor 110 may determine whether the time taken for the heater 120 to reach the target temperature Tₜ, about 270°C, is in the range from about 25 seconds to about 27 seconds. When the time taken for the heater 120 to reach the target temperature Tₜ is less than the preset range 540, the processor 110 may supply power to the heater 120 according to the first changed preheating profile where the first compensation time 550 is added after the second section 530 of the preheating profile. Accordingly, as the second section 530 ends, the temperature of the heater 120 may reach the preheating termination temperature T_{f} and may be maintained at the preheating termination temperature T_{f} during the first compensation time 550.

Referring to the graph (c) of FIG. 5, a second changed preheating profile may include a first section 520, a second section 530, and a second compensation time 555. In this case, the second changed preheating profile may be a preheating profile applied to the heater 120 when the aerosol-generating article inserted into the aerosol-generating device 100 is in a second abnormal state. The second abnormal state may be an over-wet state in which an aerosol-generating article contains a great amount of moisture because of external environment conditions or manufacturing conditions. Also, the graph (c) showing the second changed preheating profile may include total preheating time 510c obtained after the second compensation time 555 is added to the total preheating time 510a.

In an embodiment, the processor 110 may determine whether the time taken for the heater 120 to reach the target temperature Tₜ is within the preset range 540. For example, when the preset range 540 is from about 25 seconds to about 27 seconds, the processor 110 may determine whether the time taken for the heater 120 to reach the target temperature Tₜ, about 270°C, is in the range from about 25 seconds to about 27 seconds. When the time taken for the heater 120 to reach the target temperature Tₜ is greater than the preset range 540, the processor 110 may supply power to the heater 120 according to the second changed preheating profile where the second compensation time 555 is added after the second section 530 of the preheating profile. Accordingly, as the second section 530 ends, the temperature of the heater 120 may reach the preheating termination temperature T_{f} and may be maintained at the preheating termination temperature T_{f} during the second compensation time 555.

In an embodiment, the preheating termination temperature T_{f} according to the first changed preheating profile may be the same as the preheating termination temperature T_{f} according to the second changed preheating profile. For example, the first changed preheating profile is to additionally heat the aerosol-generating article and may be a profile for sufficiently heating the aerosol-generating article by maintaining the preheating termination temperature T_{f} of the heater 120. As another example, the second changed preheating profile is to alleviate the heat in the aerosol-generating article and may be a profile for properly heating the aerosol-generating article from which a great amount of moisture is removed by maintaining the preheating termination temperature T_{f} of the heater 120.

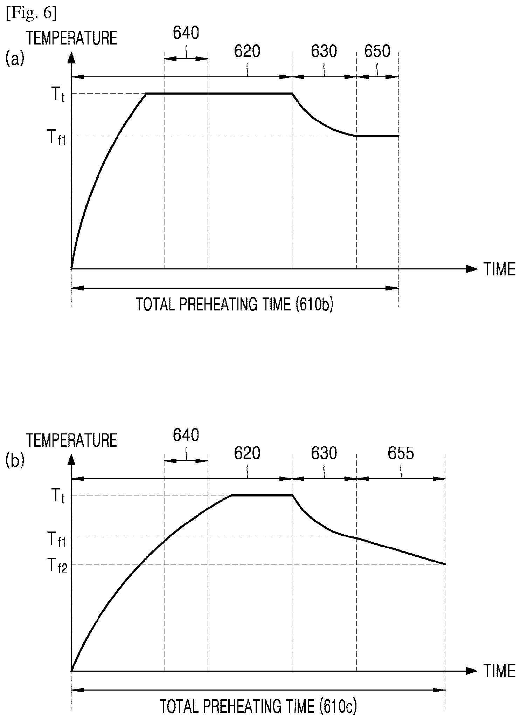

FIG. 6 illustrates another example of a preheating profile in a first abnormal state and a second abnormal state.

Referring to the graph (a) of FIG. 6, a first changed preheating profile may include a first section 620, a second section 630, and a first compensation time 650. In this case, the first changed preheating profile may be a preheating profile applied to a heater (e.g., the heater 120 of FIG. 1) when an aerosol-generating article inserted into an aerosol-generating device (e.g., the aerosol-generating device 100 of FIG. 1) is in a first abnormal state. The first abnormal state may be a state in which heat generated from the heater 120 (e.g., an external heater) is not sufficiently transmitted to the aerosol-generating article because a thickness of the aerosol-generating article is too small.

In an embodiment, when the time taken by a temperature of the heater 120 to reach a target temperature Tₜ is within a preset range 640, a processor (e.g., the processor 110 of FIG. 1) may supply power to the heater 120 according to a first changed preheating profile obtained after the first compensation time 650 is added after the second section 630 of the preheating profile. Accordingly, as the second section 630 ends, the temperature of the heater 120 may reach a first preheating termination temperature T_{f1} and may be maintained at the first preheating termination temperature T_{f1} during the first compensation time 650.

Referring to the graph (b) of FIG. 6, a second changed preheating profile may include a first section 620, a second section 630, and a second compensation time 655. In this case, the second changed preheating profile may be a preheating profile applied to the heater 120 when the aerosol-generating article inserted into the aerosol-generating device 100 is in a second abnormal state. The second abnormal state may be an over-wet state in which an aerosol-generating article contains a great amount of moisture because of external environment conditions or manufacturing conditions.

In an embodiment, when the time taken for the heater 120 to reach the target temperature Tₜ is greater than the preset range 640, the processor 110 may supply power to the heater 120 according to the second changed preheating profile obtained after the second compensation time 655 is added after the second section 630 of the preheating profile. Accordingly, as the second section 630 ends, the temperature of the heater 120 may reach the first preheating termination temperature T_{f1} and decrease to a second preheating termination temperature T_{f2} during the second compensation time 655.

In an embodiment, a final preheating termination temperature according to the first changed preheating profile may be different from a final preheating termination temperature according to the second changed preheating profile. For example, the first changed preheating profile is to additionally heat the aerosol-generating article and may be a profile for sufficiently heating the aerosol-generating article by maintaining the preheating termination temperature of the heater 120 at the first preheating termination temperature T_{f1}. As another example, the second changed preheating profile is to alleviate the heat in the aerosol-generating article and may be a profile for properly heating the aerosol-generating article from which a great amount of moisture is removed by reducing the preheating termination temperature of the heater 120 from the first preheating termination temperature T_{f1} to the second preheating termination temperature T_{f2}. However, an embodiment in which the first preheating termination temperature T_{f1} is higher than the second preheating termination temperature T_{f2} is only described, but one or more embodiments are not limited thereto.

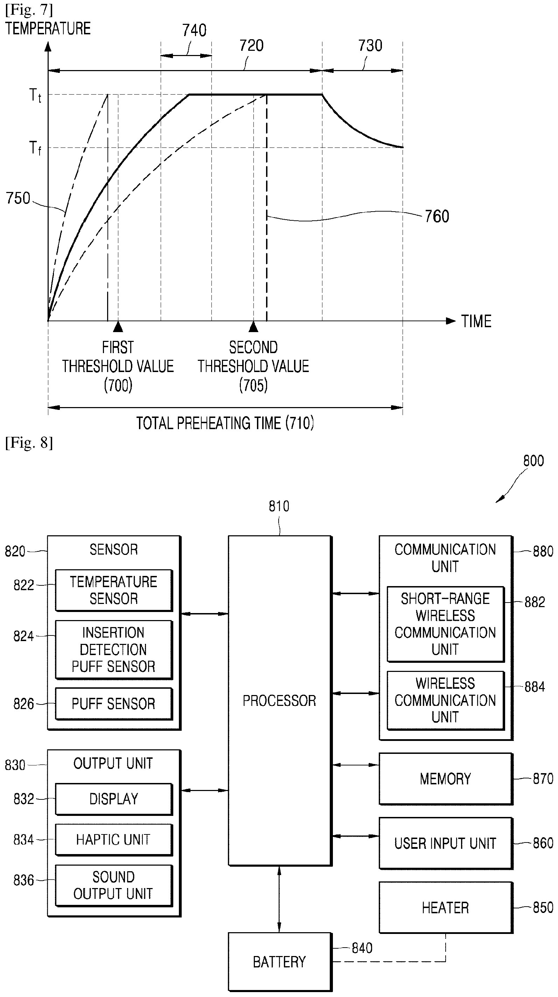

FIG. 7 illustrates an example of a preheating profile when an abnormal operation of a heater is detected.

Referring to FIG. 7, the existing preheating profile may include a first section 720 and a second section 730. The existing preheating profile may include total preheating time 710 that is preset. In an embodiment, a processor (e.g., the processor 110 of FIG. 1) may determine whether a time taken by a temperature of a heater (e.g., the heater 120 of FIG. 1) to reach a target temperature Tₜ is within a preset range 740.

In an embodiment, when the time taken for the heater 120 to reach the target temperature Tₜ is less than the preset range 740 and is also less than a first threshold value 700, a first abnormal operation 750 is detected. In this case, the processor 110 may stop supplying power to the heater 120. For example, the preset range 740 may be set to be from about 25 seconds to about 27 seconds, and the first threshold value 700 may be set to be about 23 seconds. In this case, when the time taken for the heater 120 to reach the target temperature Tₜ, about 270°C, is 20 seconds, the processor 110 may stop supplying power from a battery to the heater 120.

In another embodiment, when the time taken for the heater 120 to reach the target temperature Tₜ is greater than the preset range 740 and is also greater than a second threshold value 705, a second abnormal operation 760 is detected. In this case, the processor 110 may stop supplying power to the heater 120. For example, the preset range 740 may be set to be from about 25 seconds to about 27 seconds, and the second threshold value 705 may be set to be about 29 seconds. In this case, when the time taken for the heater 120 to reach the target temperature Tₜ, about 270°C, is 30 seconds, the processor 110 may stop supplying power from the battery to the heater 120.

FIG. 8 is a block diagram of an aerosol generating device 800 according to another embodiment.

The aerosol generating device 800 may include a controller 810, a sensing unit 820, an output unit 830, a battery 840, a heater 850, a user input unit 860, a memory 870, and a communication unit 880. However, the internal structure of the aerosol generating device 800 is not limited to those illustrated in FIG. 8. That is, according to the design of the aerosol generating device 800, it will be understood by one of ordinary skill in the art that some of the components shown in FIG. 8 may be omitted or new components may be added.

The sensing unit 820 may sense a state of the aerosol generating device 800 and a state around the aerosol generating device 800, and transmit sensed information to the controller 810. Based on the sensed information, the controller 810 may control the aerosol generating device 800 to perform various functions, such as controlling an operation of the heater 850, limiting smoking, determining whether an aerosol generating article (e.g., a cigarette, a cartridge, or the like) is inserted, displaying a notification, or the like.

The sensing unit 820 may include at least one of a temperature sensor 822, an insertion detection sensor, and a puff sensor 826, but is not limited thereto.

The temperature sensor 822 may sense a temperature at which the heater 850 (or an aerosol generating material) is heated. The aerosol generating device 800 may include a separate temperature sensor for sensing the temperature of the heater 850, or the heater 850 may serve as a temperature sensor. Alternatively, the temperature sensor 822 may also be arranged around the battery 840 to monitor the temperature of the battery 840.

The insertion detection sensor 824 may sense insertion and/or removal of an aerosol generating article. For example, the insertion detection sensor 824 may include at least one of a film sensor, a pressure sensor, an optical sensor, a resistive sensor, a capacitive sensor, an inductive sensor, and an infrared sensor, and may sense a signal change according to the insertion and/or removal of an aerosol generating article.

The puff sensor 826 may sense a user's puff on the basis of various physical changes in an airflow passage or an airflow channel. For example, the puff sensor 826 may sense a user's puff on the basis of any one of a temperature change, a flow change, a voltage change, and a pressure change.

The sensing unit 820 may include, in addition to the temperature sensor 822, the insertion detection sensor 824, and the puff sensor 826 described above, at least one of a temperature/humidity sensor, a barometric pressure sensor, a magnetic sensor, an acceleration sensor, a gyroscope sensor, a location sensor (e.g., a global positioning system (GPS)), a proximity sensor, and a red-green-blue (RGB) sensor (illuminance sensor). Because a function of each of sensors may be intuitively inferred by one of ordinary skill in the art from the name of the sensor, a detailed description thereof may be omitted.

The output unit 830 may output information on a state of the aerosol generating device 800 and provide the information to a user. The output unit 830 may include at least one of a display unit 832, a haptic unit 834, and a sound output unit 836, but is not limited thereto. When the display unit 832 and a touch pad form a layered structure to form a touch screen, the display unit 832 may also be used as an input device in addition to an output device.

The display unit 832 may visually provide information about the aerosol generating device 800 to the user. For example, information about the aerosol generating device 800 may mean various pieces of information, such as a charging/discharging state of the battery 840 of the aerosol generating device 800, a preheating state of the heater 850, an insertion/removal state of an aerosol generating article, or a state in which the use of the aerosol generating device 800 is restricted (e.g., sensing of an abnormal object), or the like, and the display unit 832 may output the information to the outside. The display unit 832 may be, for example, a liquid crystal display panel (LCD), an organic light-emitting diode (OLED) display panel, or the like. In addition, the display unit 832 may be in the form of a light-emitting diode (LED) light-emitting device.

The haptic unit 834 may tactilely provide information about the aerosol generating device 800 to the user by converting an electrical signal into a mechanical stimulus or an electrical stimulus. For example, the haptic unit 834 may include a motor, a piezoelectric element, or an electrical stimulation device.

The sound output unit 836 may audibly provide information about the aerosol generating device 800 to the user. For example, the sound output unit 836 may convert an electrical signal into a sound signal and output the same to the outside.

The battery 840 may supply power used to operate the aerosol generating device 800. The battery 840 may supply power such that the heater 850 may be heated. In addition, the battery 840 may supply power required for operations of other components (e.g., the sensing unit 820, the output unit 830, the user input unit 860, the memory 870, and the communication unit 880) in the aerosol generating device 800. The battery 840 may be a rechargeable battery or a disposable battery. For example, the battery 840 may be a lithium polymer (LiPoly) battery, but is not limited thereto.

The heater 850 may receive power from the battery 840 to heat an aerosol generating material. Although not illustrated in FIG. 8, the aerosol generating device 800 may further include a power conversion circuit (e.g., a direct current (DC)/DC converter) that converts power of the battery 840 and supplies the same to the heater 850. In addition, when the aerosol generating device 800 generates aerosols in an induction heating method, the aerosol generating device 800 may further include a DC/al-ternating current (AC) that converts DC power of the battery 840 into AC power.

The controller 810, the sensing unit 820, the output unit 830, the user input unit 860, the memory 870, and the communication unit 880 may each receive power from the battery 840 to perform a function. Although not illustrated in FIG. 8, the aerosol generating device 800 may further include a power conversion circuit that converts power of the battery 840 to supply the power to respective components, for example, a low dropout (LDO) circuit, or a voltage regulator circuit.

In an embodiment, the heater 850 may be formed of any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, nichrome, or the like, but is not limited thereto. In addition, the heater 850 may be implemented by a metal wire, a metal plate on which an electrically conductive track is arranged, a ceramic heating element, or the like, but is not limited thereto.

In another embodiment, the heater 850 may be a heater of an induction heating type. For example, the heater 850 may include a suspector that heats an aerosol generating material by generating heat through a magnetic field applied by a coil.

The user input unit 860 may receive information input from the user or may output information to the user. For example, the user input unit 860 may include a key pad, a dome switch, a touch pad (a contact capacitive method, a pressure resistance film method, an infrared sensing method, a surface ultrasonic conduction method, an integral tension measurement method, a piezo effect method, or the like), a jog wheel, a jog switch, or the like, but is not limited thereto. In addition, although not illustrated in FIG. 8, the aerosol generating device 800 may further include a connection interface, such as a universal serial bus (USB) interface, and may connect to other external devices through the connection interface, such as the USB interface, to transmit and receive information, or to charge the battery 840.

The memory 870 is a hardware component that stores various types of data processed in the aerosol generating device 800, and may store data processed and data to be processed by the controller 810. The memory 870 may include at least one type of storage medium from among a flash memory type, a hard disk type, a multimedia card micro type memory, a card-type memory (for example, secure digital (SD) or extreme digital (XD) memory, etc.), random access memory (RAM), static random access memory (SRAM), read-only memory (ROM), electrically erasable programmable read-only memory (EEPROM), programmable read-only memory (PROM), a magnetic memory, a magnetic disk, and an optical disk. The memory 870 may store an operation time of the aerosol generating device 800, the maximum number of puffs, the current number of puffs, at least one temperature profile, data on a user's smoking pattern, etc.

The communication unit 880 may include at least one component for communication with another electronic device. For example, the communication unit 880 may include a short-range wireless communication unit 882 and a wireless communication unit 884.

The short-range wireless communication unit 882 may include a Bluetooth communication unit, a Bluetooth Low Energy (BLE) communication unit, a near field communication unit, a wireless LAN (WLAN) (Wi-Fi) communication unit, a Zigbee communication unit, an infrared data association (IrDA) communication unit, a Wi-Fi Direct (WFD) communication unit, an ultra-wideband (UWB) communication unit, an Ant+ communication unit, or the like, but is not limited thereto.

The wireless communication unit 884 may include a cellular network communication unit, an Internet communication unit, a computer network (e.g., local area network (LAN) or wide area network (WAN)) communication unit, or the like, but is not limited thereto. The wireless communication unit 884 may also identify and authenticate the aerosol generating device 800 within a communication network by using subscriber information (e.g., International Mobile Subscriber Identifier (IMSI)).

The controller 810 may control general operations of the aerosol generating device 800. In an embodiment, the controller 810 may include at least one processor. The processor may be implemented as an array of a plurality of logic gates or may be implemented as a combination of a general-purpose microprocessor and a memory in which a program executable by the microprocessor is stored. It will be understood by one of ordinary skill in the art that the processor may be implemented in other forms of hardware.

The controller 810 may control the temperature of the heater 850 by controlling supply of power of the battery 840 to the heater 850. For example, the controller 810 may control power supply by controlling switching of a switching element between the battery 840 and the heater 850. In another example, a direct heating circuit may also control power supply to the heater 850 according to a control command of the controller 810.

The controller 810 may analyze a result sensed by the sensing unit 820 and control subsequent processes to be performed. For example, the controller 810 may control power supplied to the heater 850 to start or end an operation of the heater 850 on the basis of a result sensed by the sensing unit 820. As another example, the controller 810 may control, based on a result sensed by the sensing unit 820, an amount of power supplied to the heater 850 and the time the power is supplied, such that the heater 850 may be heated to a certain temperature or maintained at an appropriate temperature.

The controller 810 may control the output unit 830 on the basis of a result sensed by the sensing unit 820. For example, when the number of puffs counted through the puff sensor 826 reaches a preset number, the controller 810 may notify the user that the aerosol generating device 800 will soon be terminated through at least one of the display unit 832, the haptic unit 834, and the sound output unit 836.

One embodiment may also be implemented in the form of a computer-readable recording medium including instructions executable by a computer, such as a program module executable by the computer. The computer-readable recording medium may be any available medium that may be accessed by a computer and includes both volatile and nonvolatile media, and removable and non-removable media. In addition, the computer-readable recording medium may include both a computer storage medium and a communication medium. The computer storage medium includes all of volatile and nonvolatile media, and removable and non-removable media implemented by any method or technology for storage of information such as computer-readable instructions, data structures, program modules, or other data. The communication medium typically includes computer-readable instructions, data structures, other data in modulated data signals such as program modules, or other transmission mechanisms, and includes any information transfer media.

The descriptions of the above-described embodiments are merely examples, and it will be understood by one of ordinary skill in the art that various changes and equivalents thereof may be made.

## Claims

1. An aerosol-generating device comprising:
a heater (120) configured to heat at least a portion of an aerosol-generating article; and
a processor (110) configured to control supply of power to the heater (120) according to a preheating profile comprising a first section and a second section,
wherein the processor (110) is further configured to:
when a time taken for the heater (120) to reach a target temperature in the first section is less than or greater than a preset range, obtain a changed preheating profile in which a time corresponding to the second section is changed; and
supply power to the heater (120) according to the changed preheating profile.

2. The aerosol-generating device of claim 1, wherein the processor (110) is further configured to:
when the time taken for the heater to reach the target temperature is less than the preset range, obtain a first changed preheating profile in which a first compensation time is added to a time preset for the second section; and
when the time taken for the heater to reach the target temperature is greater than the preset range, obtain a second changed preheating profile in which a second compensation time is added to the time preset for the second section, the second compensation time being longer than the first compensation time.

3. The aerosol-generating device of claim 2, wherein a preheating termination temperature according to the first changed preheating profile is equal to a preheating termination temperature according to the second changed preheating profile.

4. The aerosol-generating device of claim 2, wherein a preheating termination temperature according to the first changed preheating profile is different from a preheating termination temperature according to the second changed preheating profile.

5. The aerosol-generating device of claim 2, further comprising a memory (870) configured to store compensation time data corresponding to the time taken for the heater to reach the target temperature,
wherein the processor is further configured to set the first compensation time or the second compensation time based on the compensation time data obtained from the memory.

6. The aerosol-generating device of claim 1, wherein the first section comprises a temperature increase section in which a temperature of the heater increases to the target temperature, and a temperature maintaining section in which the temperature of the heater is maintained at the target temperature, and the second section comprises a temperature decrease section in which the temperature of the heater decreases to a preheating termination temperature, and
wherein the processor is further configured to:
supply power to the heater according to the temperature increase section and the temperature maintaining section during the first section; and
supply power to the heater according to the temperature decrease section during the changed second section.

7. The aerosol-generating device of claim 1, wherein the processor is further configured to, when the time taken for the heater to reach the target temperature is less than the preset range and a first threshold value, or when the time taken for the heater to reach the target temperature is greater than the preset range and a second threshold value, stop supplying power to the heater.

8. The aerosol-generating device of claim 7, wherein the first threshold value and the second threshold value each indicate the time taken for the heater to reach the target temperature when the heater operates abnormally.

9. An operating method of an aerosol-generating device, the operating method comprising:
when a time taken to reach a target temperature in a first section of a preheating profile comprising the first section and a second section is less than or greater than a preset range, obtaining a changed preheating profile in which a time corresponding to the second section is changed; and
supplying power to a heater according to the changed preheating profile.

10. The operating method of claim 9, wherein the obtaining comprises:
when the time taken to reach the target temperature is less than the preset range, obtaining a first changed preheating profile in which a first compensation time is added to a time preset for the second section; and
when the time taken to reach the target temperature is greater than the preset range, obtaining a second changed preheating profile in which a second compensation time is added to the time preset for the second section, wherein the second compensation time is longer than the first compensation time.

11. The operating method of claim 10, wherein a preheating termination temperature according to the first changed preheating profile is equal to a preheating termination temperature according to the second changed preheating profile.

12. The operating method of claim 10, wherein a preheating termination temperature according to the first changed preheating profile is different from a preheating termination temperature according to the second changed preheating profile.

13. The operating method of claim 10, wherein the first compensation time or the second compensation time is set based on compensation time data stored in a memory and corresponding to the time to reach the target temperature.

14. The operating method of claim 9, wherein the supplying comprises:
supplying power to the heater during the first section such that a temperature of the heater increases to the target temperature in a temperature increase section, and the temperature of the heater is maintained at the target temperature in a temperature maintaining section, and
supplying power to the heater during the changed time of the second section such that the temperature of the heater decreases to a preheating termination temperature in a temperature decrease section.

15. The operating method of claim 9, further comprising, when the time taken to reach the target temperature is less than the preset range and a first threshold value, or when the time taken to reach the target temperature is greater than the preset range and a second threshold value, stopping the power supplied to the heater.

## Patentansprüche

1. Aerosolerzeugende Vorrichtung, die Folgendes umfasst:
eine Heizvorrichtung (120), die konfiguriert ist, zumindest einen Abschnitt eines aerosolerzeugenden Artikels zu erhitzen; und
einen Prozessor (110), der konfiguriert ist, die Leistungsversorgung der Heizvorrichtung (120) entsprechend einem Vorheizprofil, das einen ersten Teilabschnitt und einen zweiten Teilabschnitt umfasst, zu steuern,
wobei der Prozessor (110) ferner konfiguriert ist:
dann, wenn in dem ersten Teilabschnitt eine Zeit, die die Heizvorrichtung (120) benötigt, um eine Zieltemperatur zu erreichen, kleiner als oder größer als ein voreingestellter Bereich ist, ein verändertes Vorheizprofil zu erhalten, in dem eine Zeit, die dem zweiten Teilabschnitt entspricht, verändert wird; und
die Heizvorrichtung (120) entsprechend dem veränderten Vorheizprofil mit Leistung zu versorgen.

2. Aerosolerzeugende Vorrichtung nach Anspruch 1, wobei der Prozessor (110) ferner konfiguriert ist:
dann, wenn die Zeit, die die Heizvorrichtung benötigt, um die Zieltemperatur zu erreichen, kleiner ist als der voreingestellte Bereich, ein erstes verändertes Vorheizprofil zu erhalten, in dem eine erste Kompensationszeit zu einer Zeit, die für den zweiten Teilabschnitt voreingestellt ist, hinzugefügt wird; und
dann, wenn die Zeit, die die Heizvorrichtung benötigt, um die Zieltemperatur zu erreichen, größer ist als der voreingestellte Bereich, eine zweites verändertes Vorheizprofil zu erhalten, in dem eine zweite Kompensationszeit zu der Zeit, die für den zweiten Teilabschnitt voreingestellt ist, hinzugefügt wird, wobei die zweite Kompensationszeit länger ist als die erste Kompensationszeit.

3. Aerosolerzeugende Vorrichtung nach Anspruch 2, wobei eine Vorheiz-Endtemperatur entsprechend dem ersten veränderten Vorheizprofil gleich einer Vorheiz-Endtemperatur entsprechend dem zweiten veränderten Vorheizprofil ist.

4. Aerosolerzeugende Vorrichtung nach Anspruch 2, wobei eine Vorheiz-Endtemperatur entsprechend dem ersten veränderten Vorheizprofil sich von einer Vorheiz-Endtemperatur entsprechend dem zweiten veränderten Vorheizprofil unterscheidet.

5. Aerosolerzeugende Vorrichtung nach Anspruch 2, die ferner einen Speicher (870) umfasst, der konfiguriert ist, Kompensationszeitdaten entsprechend der Zeit, die die Heizvorrichtung benötigt, um die Zieltemperatur zu erreichen, zu speichern,
wobei der Prozessor ferner konfiguriert ist, die erste Kompensationszeit oder die zweite Kompensationszeit basierend auf den Kompensationszeitdaten, die er aus dem Speicher erhalten hat, einzustellen.

6. Aerosolerzeugende Vorrichtung nach Anspruch 1, wobei der erste Teilabschnitt einen Temperaturerhöhungsteilabschnitt, in dem eine Temperatur der Heizvorrichtung auf die Zieltemperatur erhöht wird, und einen Temperaturhalteteilabschnitt, in dem die Temperatur der Heizvorrichtung auf der Zieltemperatur gehalten wird, umfasst und der zweite Teilabschnitt einen Temperaturabnahmeteilabschnitt umfasst, in dem die Temperatur der Heizvorrichtung auf eine Vorheiz-Endtemperatur verringert wird, und
wobei der Prozessor ferner konfiguriert ist:
die Heizvorrichtung entsprechend dem Temperaturerhöhungsteilabschnitt und dem Temperaturhalteteilabschnitt während des ersten Teilabschnitts mit Leistung zu versorgen; und
die Heizvorrichtung entsprechend dem Temperaturabnahmeteilabschnitt während des veränderten zweiten Teilabschnitts mit Leistung zu versorgen.

7. Aerosolerzeugende Vorrichtung nach Anspruch 1, wobei der Prozessor ferner konfiguriert ist, dann, wenn die Zeit, die die Heizvorrichtung benötigt, um die Zieltemperatur zu erreichen, kleiner ist als der voreingestellte Bereich und ein erster Schwellenwert, oder wenn die Zeit, die die Heizvorrichtung benötigt, um die Zieltemperatur zu erreichen, größer ist als der voreingestellte Bereich und ein zweiter Schwellenwert, die Leistungsversorgung der Heizvorrichtung zu beenden.

8. Aerosolerzeugende Vorrichtung nach Anspruch 7, wobei der erste Schwellenwert und der zweite Schwellenwert jeweils die Zeit anzeigen, die die Heizvorrichtung benötigt, um die Zieltemperatur zu erreichen, wenn die Heizvorrichtung anomal arbeitet.

9. Betriebsverfahren einer aerosolerzeugenden Vorrichtung, wobei das Betriebsverfahren Folgendes umfasst:
dann, wenn eine Zeit, die benötigt wird, um in einem ersten Teilabschnitt eines Vorheizprofils, das den ersten Teilabschnitt und einen zweiten Teilabschnitt umfasst, eine Zieltemperatur zu erreichen, kleiner als oder größer als ein voreingestellter Bereich ist, Erhalten eines veränderten Vorheizprofils, in dem eine Zeit, die dem zweiten Teilabschnitt entspricht, verändert wird; und
Versorgen einer Heizvorrichtung mit Leistung entsprechend dem veränderten Vorheizprofil.

10. Betriebsverfahren nach Anspruch 9, wobei das Erhalten Folgendes umfasst:
dann, wenn die Zeit, die benötigt wird, um die Zieltemperatur zu erreichen, kleiner ist als der voreingestellte Bereich, Erhalten eines ersten veränderten Vorheizprofils, in dem eine erste Kompensationszeit zu einer Zeit, die für den zweiten Teilabschnitt voreingestellt ist, hinzugefügt wird; und
dann, wenn die Zeit, die benötigt wird, um die Zieltemperatur zu erreichen, größer ist als der voreingestellte Bereich, Erhalten eines zweiten veränderten Vorheizprofils, in dem eine zweite Kompensationszeit zu der Zeit, die für den zweiten Teilabschnitt voreingestellt ist, hinzugefügt wird, wobei die zweite Kompensationszeit länger ist als die erste Kompensationszeit.

11. Betriebsverfahren nach Anspruch 10, wobei eine Vorheiz-Endtemperatur entsprechend dem ersten veränderten Vorheizprofil gleich einer Vorheiz-Endtemperatur entsprechend dem zweiten veränderten Vorheizprofil ist.

12. Betriebsverfahren nach Anspruch 10, wobei eine Vorheiz-Endtemperatur entsprechend dem ersten veränderten Vorheizprofil sich von einer Vorheiz-Endtemperatur entsprechend dem zweiten veränderten Vorheizprofil unterscheidet.

13. Betriebsverfahren nach Anspruch 10, wobei die erste Kompensationszeit oder die zweite Kompensationszeit basierend auf Kompensationszeitdaten, die in einem Speicher gespeichert sind, und entsprechend der Zeit, um die Zieltemperatur zu erreichen, eingestellt wird.

14. Betriebsverfahren nach Anspruch 9, wobei das Versorgen Folgendes umfasst:
Versorgen der Heizvorrichtung mit Leistung während des ersten Teilabschnitts derart, dass eine Temperatur der Heizvorrichtung in einem Temperaturerhöhungsteilabschnitt auf die Zieltemperatur erhöht wird, und die Temperatur der Heizvorrichtung in einem Temperaturhalteteilabschnitt auf der Zieltemperatur gehalten wird, und
Versorgen der Heizvorrichtung mit Leistung während der veränderten Zeit des zweiten Teilabschnitts derart, dass die Temperatur der Heizvorrichtung in einem Temperaturabnahmeteilabschnitt auf eine Vorheiz-Endtemperatur abnimmt.

15. Betriebsverfahren nach Anspruch 9, das ferner, dann, wenn die Zeit, die benötigt wird, um die Zieltemperatur zu erreichen, kleiner ist als der vorbestimmte Bereich und ein erster Schwellenwert, oder dann, wenn die Zeit, die benötigt wird, um die Zieltemperatur zu erreichen, größer ist als der voreingestellte Bereich und ein zweiter Schwellenwert, das Beenden der Leistungsversorgung der Heizvorrichtung umfasst.

## Revendications

1. Dispositif de production d'aérosol comportant :
un élément chauffant (120) configuré pour chauffer au moins une portion d'un article de production d'aérosol ; et
un processeur (110) configuré pour commander la fourniture d'énergie à l'élément chauffant (120) en fonction d'un profil de préchauffage comportant une première partie et une seconde partie,
dans lequel le processeur (110) est en outre configuré pour :
lorsqu'un temps requis pour que l'élément chauffant (120) atteigne une température cible dans la première partie est inférieur ou supérieur à une plage prédéfinie, obtenir un profil de préchauffage modifié dans lequel un temps correspondant à la seconde partie est changé ; et
fournir de l'énergie à l'élément chauffant (120) en fonction du profil de préchauffage modifié.

2. Dispositif de production d'aérosol selon la revendication l, dans lequel le processeur (110) est en outre configuré pour :
lorsque le temps requis pour que l'élément chauffant atteigne la température cible est inférieur à la plage prédéfinie, obtenir un premier profil de préchauffage modifié dans lequel un premier temps de compensation est ajouté à un temps préétabli pour la seconde partie ; et
lorsque le temps requis pour que l'élément chauffant atteigne la température cible est supérieur à la plage prédéfinie, obtenir un second profil de préchauffage modifié dans lequel un second temps de compensation est ajouté au temps prédéfini pour la seconde partie, le second temps de compensation étant plus long que le premier temps de compensation.

3. Dispositif de production d'aérosol selon la revendication 2, dans lequel une température de fin de préchauffage en fonction du premier profil de préchauffage modifié est égale à une température de fin de préchauffage en fonction du second profil de préchauffage modifié.

4. Dispositif de production d'aérosol selon la revendication 2, dans lequel une température de fin de préchauffage en fonction du premier profil de préchauffage modifié est différente d'une température de fin de préchauffage en fonction du second profil de préchauffage modifié.

5. Dispositif de production d'aérosol selon la revendication 2, comportant en outre une mémoire (870) configurée pour stocker des données de temps de compensation correspondant au temps requis pour que l'élément chauffant atteigne la température cible,
dans lequel le processeur est en outre configuré pour fixer le premier temps de compensation ou le second temps de compensation sur la base des données de temps de compensation obtenues à partir de la mémoire.

6. Dispositif de production d'aérosol selon la revendication 1, dans lequel la première partie comporte une partie d'augmentation de température dans laquelle une température de l'élément chauffant augmente jusqu'à la température cible, et une partie de maintien en température dans laquelle la température de l'élément chauffant est maintenue à la température cible, et la seconde partie comporte une partie de diminution de température dans laquelle la température de l'élément chauffant diminue jusqu'à une température de fin de préchauffage, et
dans lequel le processeur est en outre configuré pour :
fournir de l'énergie à l'élément chauffant en fonction de la partie d'augmentation de température et de la partie de maintien en température pendant la première partie ; et
fournir de l'énergie à l'élément chauffant en fonction de la partie de diminution de température pendant la seconde partie modifiée.

7. Dispositif de production d'aérosol selon la revendication 1, dans lequel le processeur est en outre configuré pour, lorsque le temps requis pour que l'élément chauffant atteigne la température cible est inférieur à la plage prédéfinie et à une première valeur de seuil, ou lorsque le temps requis pour que l'élément chauffant atteigne la température cible est supérieur à la plage prédéfinie et à une seconde valeur de seuil, arrêter de fournir de l'énergie à l'élément chauffant.

8. Dispositif de production d'aérosol selon la revendication 7, dans lequel la première valeur de seuil et la seconde valeur de seuil indiquent chacune le temps requis pour que l'élément chauffant atteigne la température cible lorsque l'élément chauffant fonctionne anormalement.

9. Procédé de fonctionnement d'un dispositif de production d'aérosol, le procédé de fonctionnement comportant les étapes consistant à :
lorsqu'un temps requis pour atteindre une température cible dans une première partie d'un profil de préchauffage comportant la première partie et une seconde partie est inférieur ou supérieur à une plage prédéfinie, obtenir un profil de préchauffage modifié dans lequel un temps correspondant à la seconde partie est changé ; et
fournir de l'énergie à un élément chauffant en fonction du profil de préchauffage modifié.

10. Procédé de fonctionnement selon la revendication 9, dans lequel l'obtention comporte de :
lorsque le temps requis pour atteindre la température cible est inférieur à la plage prédéfinie, obtenir un premier profil de préchauffage modifié dans lequel un premier temps de compensation est ajouté à un temps prédéfini pour la seconde partie ; et
lorsque le temps requis pour atteindre la température cible est supérieur à la plage prédéfinie, obtenir un second profil de préchauffage modifié dans lequel un second temps de compensation est ajouté au temps prédéfini pour la seconde partie, dans lequel le second temps de compensation est plus long que le premier temps de compensation.

11. Procédé de fonctionnement selon la revendication 10, dans lequel une température de fin de préchauffage en fonction du premier profil de préchauffage modifié est égale à une température de fin de préchauffage en fonction du second profil de préchauffage modifié.

12. Procédé de fonctionnement selon la revendication 10, dans lequel une température de fin de préchauffage en fonction du premier profil de préchauffage modifié est différente d'une température de fin de préchauffage en fonction du second profil de préchauffage modifié.

13. Procédé de fonctionnement selon la revendication 10, dans lequel le premier temps de compensation ou le second temps de compensation est fixé sur la base de données de temps de compensation stockées dans une mémoire et correspondant au temps pour atteindre la température cible.

14. Procédé de fonctionnement selon la revendication 9, dans lequel la fourniture comporte de :
fournir de l'énergie à l'élément chauffant pendant la première partie de telle sorte qu'une température de l'élément chauffant augmente jusqu'à la température cible dans une partie d'augmentation de température, et la température de l'élément chauffant est maintenue à la température cible dans une partie de maintien en température, et
fournir de l'énergie à l'élément chauffant pendant le temps changé de la seconde partie de telle sorte que la température de l'élément chauffant diminue jusqu'à une température de fin de préchauffage dans une partie de diminution de température.

15. Procédé de fonctionnement selon la revendication 9, comportant en outre, lorsque le temps requis pour atteindre la température cible est inférieur à la plage prédéfinie et à une première valeur de seuil, ou lorsque le temps requis pour atteindre la température cible est supérieur à la plage préétablie et à une seconde valeur de seuil, d'arrêter l'énergie fournie à l'élément chauffant.
